(19) Europäisches Patentamt
European Patent Office
Office européen des brevets

(11) **EP 4 761 403 A1**

(12) **EUROPEAN PATENT APPLICATION**
published in accordance with Art. 153(4) EPC

(43) Date of publication:
**17.06.2026 Bulletin 2026/25**

(51) International Patent Classification (IPC):
*H04W 72/04* (2023.01)

(21) Application number: **24853470.3**

(52) Cooperative Patent Classification (CPC):
**H04W 4/40; H04W 72/04; H04W 72/0446**

(22) Date of filing: **16.07.2024**

(86) International application number:
**PCT/CN2024/105770**

(87) International publication number:
**WO 2025/036058 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.08.2023 CN 202311031176**

(71) Applicant: **Sanechips Technology Co., Ltd.
Shenzhen, Guangdong 518055 (CN)**

(72) Inventors:
• **FAN, Shiying
Shenzhen, Guangdong 518055 (CN)**
• **SUN, Yilei
Shenzhen, Guangdong 518055 (CN)**

(74) Representative: **Cristinelli, Luca et al
Jacobacci & Partners S.p.A.
Corso Emilia, 8
10152 Torino (IT)**

(54) **TTI STORAGE METHOD AND APPARATUS, AND ELECTRONIC DEVICE AND COMPUTER-READABLE STORAGE MEDIUM**

(57)    Provided are a TTI storage method and apparatus, an electronic device and a computer readable storage medium. The method includes: acquiring a plurality of storage units with consecutive index numbers; wherein each of the storage units comprises a first storage space and a second storage space; acquiring a target TTI from absolute transmission time intervals (TTI) in a resource pool to be stored; wherein the absolute TTI refers to an arbitrary TTI in the resource pool; sequentially storing the absolute TTIs into the first storage spaces of the plurality of storage units according to an order within a System Frame Number (SNF) cycle; the first storage space comprises a plurality of bits and represents a TTI respectively; for each bit, a bit identifier indicates the target TTI or a non-target TTI; counting a total number of the target TTIs stored in all storage units having index numbers less than a respective index number of each of the storage units; and storing the total number of the target TTIs into the second storage space of a corresponding storage unit.

| Step | Description |
|---|---|
| S11 | Acquiring a plurality of storage units with consecutive index numbers; where each of the storage units includes a first storage space and a second storage space |
| S12 | Acquiring a target TTI from absolute transmission time intervals (TTI) in a resource pool to be stored; where the absolute TTI refers to an arbitrary TTI contained in the resource pool |
| S13 | Sequentially storing the absolute TTIs into the first storage spaces of the plurality of storage units according to an order of the absolute TTIs within a System Frame Number (SNF) cycle; where the first storage space includes a plurality of bits, and each bit represents a TTI; for each bit, a preset bit identifier indicates whether the bit represents the target TTI or a non-target TTI |
| S14 | Counting a total number of the target TTIs stored in all storage units having index numbers less than a respective index number of each of the storage units |
| S15 | Storing the total number of the target TTIs counted for each of the storage units into the second storage space of a corresponding storage unit |

FIG. 3

EP 4 761 403 A1

## Description

### Cross-Reference to Related Application

The present disclosure is based upon and claims the benefit of priority of Chinese Patent Application No. 202311031176.9, filed on 15 August 2023, the disclosure of which is incorporated herein by reference in its entirety.

### Technical Field

The present disclosure relates to the field of vehicle communications technologies, and in particular, to a TTI storage method and apparatus, an electronic device and a computer readable storage medium.

### Background

To avoid interference between sidelink transmissions and cellular network transmissions, a resource pool is introduced. A terminal working in the mode of autonomously selecting a transmission resource can only select a sidelink transmission resource from the resource pool. The resource pool indicates an available TTI (Transmission Time Interval) within one SFN (System Frame Number) period. In LTE-V2X (LTE: Long Term Evolution; V2X: Vehicle To Everything, exchange of all information from the vehicle to the outside), a minimum time domain resource TTI is a subframe, and in NR-V2X (NR: New Radio, new radio/new air interface), it is a slot.

Since the number of TTIs within an SFN cycle of a resource pool is huge, and a plurality of resource pools are delivered by a higher layer, a lot of memory spaces will be occupied.

### Summary

Provided are a TTI storage method and apparatus, an electronic device and a computer readable storage medium.

First aspect, some embodiments of the present disclosure provide a TTI storage method, and the method includes:

acquiring a plurality of storage units with consecutive index numbers; wherein each of the storage units comprises a first storage space and a second storage space;

acquiring a target TTI from absolute transmission time intervals (TTI) in a resource pool to be stored; wherein the absolute TTI refers to an arbitrary TTI contained in the resource pool;

sequentially storing the absolute TTIs into the first storage spaces of the plurality of storage units according to an order of the absolute TTIs within a System Frame Number (SNF) cycle; wherein the first storage space comprises a plurality of bits, and each bit represents a TTI; for each bit, a preset bit identifier indicates whether the bit represents the target TTI or a non-target TTI;

counting a total number of the target TTIs stored in all storage units having index numbers less than a respective index number of each of the storage units; and

storing the total number of the target TTIs counted for each of the storage units into the second storage space of a corresponding storage unit.

Second aspect, some embodiments of the present disclosure provide a TTI storage apparatus, including:

a first acquisition module, configured to acquire a plurality of storage units with consecutive index numbers; wherein each of the storage units comprises a first storage space and a second storage space;

a second acquisition module, configured to acquire a target TTI from absolute transmission time intervals (TTI) in a resource pool to be stored; wherein the absolute TTI refers to an arbitrary TTI contained in the resource pool;

a first storage module, configured to sequentially store the absolute TTIs into the first storage spaces of the plurality of storage units according to an order of the absolute TTIs within a System Frame Number (SNF) cycle; wherein the first storage space comprises a plurality of bits, and each bit represents a TTI; for each bit, a preset bit identifier indicates whether the bit represents the target TTI or a non-target TTI;

a counting module, configured to count a total number of the target TTIs stored in all storage units having index numbers less than a respective index number of each of the storage units;

a second storage module, configured to store the total number of the target TTIs counted for each of the storage units into the second storage space of a corresponding storage unit.

Third aspect, some embodiments of the present disclosure provide an electronic device. The electronic device includes:

one or more processors;

a memory, having one or more programs stored therein, wherein the one or more programs are configured to, when executed by the one or more processors, cause the one or more processors to implement the TTI storage method; and

one or more input/output (I/O) interfaces, connected between the processor and the memory, and configured to implement information interaction between the processor and the memory.

Fourth aspect, some embodiments of the present disclosure provide a computer readable storage medium, having a computer program stored therein, and the computer program is configured to, when the computer program is executed by a processor, implements the TTI storage method according to the first aspect.

## Brief Description of the Drawings

In the drawings of embodiments of the present disclosure:

Fig. 1 is a schematic diagram of a logical subframe number array for LTE-V2X in the related art;

Fig. 2 is a schematic diagram of a logical slot number array for NR-V2X in the related art;

Fig. 3 is a flowchart of a TTI storage method according to embodiments of the present disclosure;

Fig. 4 is a flowchart of a method for acquiring a plurality of storage units with consecutive index numbers according to embodiments of the present disclosure;

Fig. 5 is a schematic diagram of an array according to embodiments of the present disclosure;

Fig. 6 is a schematic diagram of allocation of TDD subframes in the related art;

Fig. 7 is a schematic diagram of logical subframes within an SFN cycle in the related art;

Fig. 8 is a schematic diagram of available subframes within an NR-V2X SFN cycle in the related art;

Fig. 9 is a schematic diagram of time slots within one TDD configuration period in the related art;

Fig. 10 is a flowchart of a method for detecting whether a logical TTI corresponding to an arbitrary logical TTI number is an available subframe, according to an arbitrary logical TTI number and a second bit identifiers in a plurality of third storage spaces according to embodiments of the present disclosure;

Fig. 11 is a flowchart of a method for determining an absolute TTI number corresponding to an arbitrary logical TTI, according to a logical TTI number of an arbitrary logical TTI and an index number of a storage unit where a arbitrary logical TTI is located according to embodiments of the present disclosure;

Fig. 12 is a flowchart of a method for determining a logical TTI number corresponding to the arbitrary logical TTI, according to an absolute TTI number corresponding to an arbitrary logical TTI and a bit capacity set for a first storage space according to embodiments of the present disclosure;

Fig. 13 is a flowchart of a method for detecting whether an absolute TTI corresponding to an absolute TTI number is a logical TTI according to the absolute TTI number, an index number and a second modulo result according to embodiments of the present disclosure;

Fig. 14 is a block diagram of a TTI storage apparatus according to embodiments of the present disclosure;

Fig. 15 is a block diagram of an electronic device according to embodiments of the present disclosure;

Fig. 16 is a block diagram of a computer readable storage medium according to embodiments of the present disclosure.

## Detailed Description of the Embodiments

In order to make persons skilled in the art better understand the technical solutions of the present disclosure, a communication aware data processing method and a computer readable storage medium provided in embodiments of the present disclosure will be described below in detail with reference to the accompanying drawings.

The present disclosure will be described more fully hereinafter with reference to the accompanying drawings, but the illustrated embodiments may be embodied in different forms, and the present disclosure should not be construed as being limited to the embodiments set forth below. Rather, these embodiments are provided so that the present disclosure will be thorough and complete, and will fully convey the scope of the disclosure to those skilled in the art.

The accompanying drawings of the embodiments of the present disclosure are used to provide further understanding of the embodiments of the present disclosure, constitute a part of the description, and together with the detailed embodiments, serve to explain the present disclosure, but are not intended to limit the present disclosure. The above and other features and advantages will become more apparent to those skilled in the art by describing detailed embodiments with reference to the accompanying drawings.

The embodiments of the present disclosure and the features in the embodiments may be combined with each other without conflict.

The terminology used herein is for the purpose of describing particular embodiments only and is not intended to be limiting of the disclosure. The term "and/or" as used in the present disclosure includes any and all combinations of one or more of the associated listed items. As used herein, the singular forms "a", "an", and "the" are intended to include the plural forms as well, unless the context clearly indicates otherwise. The terms "comprises", "comprising", "includes", "including", "and/or" "made of", when used in the present disclosure, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used in The present disclosure have the same meaning as commonly understood by one skilled in the art. It will also be understood that terms, such as those defined in commonly used dictionaries, should be interpreted as having a meaning that is consistent with their meaning in the context of the relevant art and the present disclosure, and will not be interpreted as having an idealized or overly formal meaning unless expressly so defined by the present disclosure.

V2X is short for Cellular V2X, i.e., a cellular network based V2X. V2X stands for "Vehicle to Everything", i.e., data communication between vehicles, and between vehicles and other devices, and can be used in a series of application scenarios, including: road safety, automatic driving, advanced driving assistance systems, road state sensing, mobility services, etc. These road application scenarios impose stricter requirements on high reliability, allowable delay, and high-speed mobility on the underlying wireless communication system. While meeting these requirements, it is also necessary to consider cost and optimize the storage space of the hardware.

LTE-V2X and NR-V2X are current sidelink communication standards for supporting two V2X services developed by 3GPP (3rd Generation Partnership Project). Both the LTE-V2X and the NR-V2X have a configuration of a resource pool, and the resource pool defines time-frequency resource range for a sidelink communication (in some communication systems, various terminal devices can transmit signaling and data via a sidelink, and such a transmission method via a sidelink can be referred to as sidelink transmission. A terminal device senses and selects a resource from a resource pool pre-configured by a network device so as to acquire a candidate resource set, and selects a resource from the candidate resource set for sidelink transmission). There are two resource allocation modes for the sidelink communication: a network-scheduling-based resource allocation mode and a terminal-autonomously-selected resource allocation mode.

When working within a coverage range of a cellular network, and being in a connected state, sidelink communication adopts the network-scheduling-based resource allocation mode: all terminals accessing a network are uniformly allocated by a base station, and the terminal receives an authorized PUCCH (Physical Uplink Control Channel) sent by the network, which indicates an uplink transmission resource for the terminal.

When operating within the coverage range of the cellular network and in an RRC-Idle (RRC: Radio Resource Control) state, or operating outside the coverage range of the cellular network, there is no base station to perform resource scheduling. In this case, the sidelink communication adopts the terminal-autonomously-selected resource allocation mode, requiring the terminal to autonomously select a sidelink transmission resource in an uplink time slot. The network cannot acquire the sidelink transmission resource autonomously selected by the terminal, and if the network schedules the transmission resource to a certain terminal for uplink transmission at this time, a transmission conflict will occur. In order to avoid interference between sidelink data transmission and cellular network transmission, the network divides a region in the uplink time slot, i.e. a resource pool, for sidelink transmission. A terminal operating in a mode of autonomously selecting a transmission resource can only select a sidelink transmission resource within this resource pool, and the network will not schedule resources within this resource pool to the terminal for uplink data transmission, thereby avoiding interference between sidelink transmission and cellular network transmission.

In order to avoid introducing interference into the resource pool (Resource Pool, as the name implies, is a set of resources used to determine time-frequency resources for sidelink transmission), a terminal can only transmit and receive data via available TTIs (Transmission Time Interval) within the resource pool. A high layer configures parameters of the resource pool, and a physical layer acquires time frequency positions of available TTIs by calculating the parameters. In LTE-V2X, the minimum time domain granularity TTI configured for a resource pool is 1 subframe, one frame is 10 ms (millisecond), one frame has 10 subframes, one subframe is 1 ms, and it is one time slot in NR-V2X. The LTE-V2X will be described below as an example, and the available TTI is an available subframe.

The calculation steps for LTE-V2X available subframe are as follows:

1. Within an SFN (System Frame Number) cycle, removing subframes that do not belong to a resource pool, including synchronization subframes, downlink subframes of a TDD (Time Division Duplexing) system, and special subframes. The remaining subframes constitute a remaining subframe set.

2. Determining a number of reserved subframes and a corresponding time domain position.

3. Removing the reserved subframes from the remaining subframe set, where the remaining subframes constitute a logical subframe set.

4. Determining, according to a bitmap, available subframes belonging to the resource pool within the logical subframe set. Generally, 1 in the bitmap represents an available subframe, and 0 represents an unavailable subframe.

The available subframes within the SFN cycle can be indicated through the above steps, and the calculation flow of the NR-V2X time slots is similar to that of the LTE-V2X, except that the subframe is replaced by a slot. One SFN cycle is 10240 ms, which corresponds to 10240 subframes in the LTE-V2X, and $10240*2^u$ (u is a natural number) slots in the NR-V2X. The aforementioned method for indicating available TTIs consumes a very large amount of memory.

In some related technologies, in order to indicate information about available subframes of a resource pool more flexibly, a bitmap is used in LTE-V2X to indicate subframes of the resource pool, and each bit in the bitmap corresponds to one subframe. A conventional linear array storage method based on bitmap is introduced below:
When determining the available subframes of the resource pool, the bitmap is periodically repeated in an SFN cycle (one SFN cycle includes 10240 subframes), thereby determining the subframe information belonging to the resource pool within one SFN cycle. After removing synchronization subframes within one SFN cycle, if the remaining subframes cannot be evenly divided by the bitmap length bitstrlen (the bitstrlen is determined according to parameters carried in the received information), the positions of subframes belonging to the resource pool in different SFN cycles will be different. When the terminal receives the resource pool configuration information in different SFN cycles, the determined time domain positions of the resource pools will also differ, resulting in inconsistency in understanding of the resource pools between the terminals. In order to avoid this problem, it needs to be ensured that time domain resource positions determined according to the resource pool configuration information are the same across different SFN cycles. Therefore, reserved subframes are introduced in LTE-V2X, the reserved subframes are not used for sidelink transmission, and the function thereof is to enable the number of logical subframes, acquired by removing synchronous subframes, downlink subframes, special subframes and reserved subframes from the total number of subframes in one SFN cycle, to be evenly divided by the length bitstrlen of a bitmap, so that time domain resources belonging to the resource pool in different SFN cycles are the same.

After excluding the reserved subframes, the remaining subframes are logical subframes. The logical subframe is transferred as a parameter in processes such as DMRS (Demodulation Reference Signal) sequence generation, scrambling, and synchronization, and a mapping relationship between the logical subframe and an absolute subframe must be stored locally. If it is stored in a linear manner, the logical subframes within one SFN cycle are stored. In LTE-V2X, 10240 subframes need to be reserved, and in NR-V2X, $10240*2^u$ slots need to be reserved. Here a subframe with slot granularity in LTE-V2X is taken as an example for description.

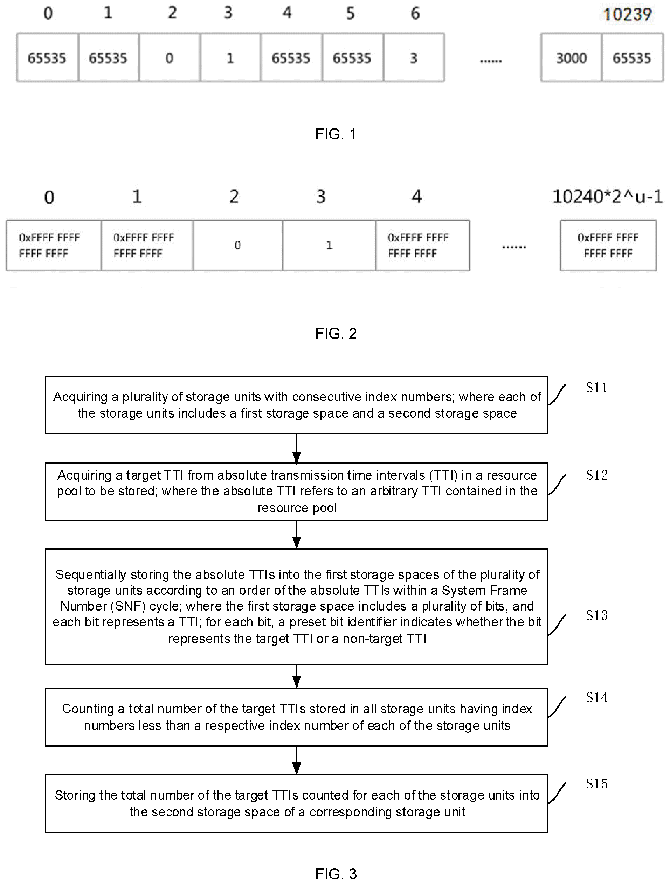

To configure a resource pool, it is necessary to indicate the availability of 10240 subframes. An array pool[10240] is set up, and the index of the array is the absolute subframe number, i.e., the absolute time number in the time domain. The array stores the logical subframe number in bytes, accumulating from 0. The setting default value of the non-logical subframe number is 65535. The maximum absolute subframe number in LTE-V2X is 10240, which is greater than the maximum storage range of 1 byte and smaller than the maximum storage range of 2 bytes, so Pool[x] is stored using 16 bits, as shown in Fig. 1.

Since the NR-V2X supports various SCS (Sub-Carrier Spacing), the maximum number of slots within one SFN cycle is $10240*2^u$, and the value of u is [0,4]. Considering that the maximum logical slot number exceeds the storage capacity of 2 bytes, the logical slot number is stored in 4 bytes, and the size of the opened group space is as shown in Fig. 2.

The above-mentioned content is a conventional linear array storage method, which uses a byte-wise approach to store 10240 logical subframe numbers, consuming a large storage space. Basically, a space occupied by each LTE-V2X resource pool is $10240*2$ bytes, and a space occupied by the NR-V2X resource pool is $10240*2^u*4$ bytes. Considering that there can be up to 25 transmission and reception resource pools, the storage of a single resource pool alone would consume memory space on the order of megabytes.

In embodiments of the present disclosure, in a scenario where available TTIs (e.g., available subframes) of a resource pool are stored and frequently queried, a memory optimization and query mode is proposed. The TTIs are stored in segments in the form of bits, and each logical subframe number is not stored directly, so that the consumption of the memory is greatly reduced, the TTI query time is improved, and the memory pressure of the embedded hardware is reduced. Hereinafter, solutions of embodiments of the present disclosure will be described in detail.

The embodiments of the present disclosure provide a TTI storage method. As shown in Fig. 3, the method includes steps S11-S15:

S11, acquiring a plurality of storage units with consecutive index numbers; where each of the storage units includes a first storage space and a second storage space;

S12, acquiring a target TTI from absolute transmission time intervals (TTI) in a resource pool to be stored; where the absolute TTI refers to an arbitrary TTI contained in the resource pool;

S13, sequentially storing the absolute TTIs into the first storage spaces of the plurality of storage units according to an order of the absolute TTIs within a System Frame Number (SNF) cycle; where the first storage space includes a plurality of bits, and each bit represents a TTI; for each bit, a preset bit identifier indicates whether the bit represents the target TTI or a non-target TTI;

S14, counting a total number of the target TTIs stored in all storage units having index numbers less than a respective index number of each of the storage units;

S15, storing the total number of the target TTIs counted for each of the storage units into the second storage space of a corresponding storage unit.

The storage manner of the embodiments of the present disclosure can be applied to, but is not limited to, TTI storage for LTE-V2X and NR-V2X, and is not limited to TTI storage, and can be applied to storage of any information. Any storage solution implemented based on the storage concept of the embodiments of the present disclosure falls within the protection scope of the present disclosure.

The TTI storage method in the embodiments of the present disclosure may be executed by any electronic device requiring information storage, such as a terminal device or a server. The terminal device may include, but is not limited to, a vehicle-mounted device, a User Equipment (UE), a mobile device, a computing device, a wearable device, and the like. For example, the terminal device includes, but is not limited to, a cellular phone, a cordless phone, a Personal Digital Assistant (PDA), a portable computer, and the like. The TTI storage method can be implemented by means of a processor invoking a computer readable program instruction stored in a memory, or can be implemented by means of a server.

In the embodiments of the present disclosure, the described storage solutions can be applied to the storage of absolute TTIs in a single resource pool, and can also be applied to a plurality of resource pools. The storage solutions in the two application scenarios will be introduced respectively below.

I. First, a detailed TTI storage solution applied in a scenario of a single resource pool is introduced.

In the embodiments of the present disclosure, when applied to a single resource pool, the target TTI is a logical TTI; the logical TTI refers to an absolute TTI which can be used for transmitting uplink data; the bit identifier includes a first bit identifier, the first bit identifier includes a first identifier and a second identifier, the first identifier indicates that the bit represents the logical subframe TTI, and the second identifier indicates that the bit represents a non-logical TTI.

In the embodiments of the present disclosure, the TTI storage method in the scenario of a single resource pool may include:

acquiring a plurality of storage units with consecutive index numbers; where each of the storage units includes a first storage space and a second storage space;

identifying a logical TTI absolute transmission time intervals (TTI) in a resource pool to be stored;

sequentially storing the absolute TTIs into the first storage spaces of the plurality of storage units according to an order of the absolute TTIs within a System Frame Number (SNF) cycle; where the first storage space includes a plurality of bits, and each bit represents a TTI; for each bit, a preset first bit identifier indicates whether the bit represents the target TTI or a non-target TTI;

counting a total number of logical TTIs stored in all storage units having index numbers less than a respective index number of each of the storage units;

storing the total number of the logical TTIs counted for each of the storage units into the second storage space of a corresponding storage unit.

In the LTE-V2X, a TTI in time domain resources of a PSCCH (Physical Sidelink Control Channel) and a PSSCH (Physical Sidelink Shared Channel) is in subframe granularity, and in the NR-V2X, a TTI is in time slot granularity.

The time domain is infinite, and the solution of the embodiments of the present disclosure uses an absolute TTI storage method in one SFN cycle, mapped to the entire time domain, to illustrate the TTI storage method in the time domain. One SFN cycle is 10240 ms (millisecond), which is 10240 subframes in LTE-V2X, and $10240*2^u$ slots in NR-V2X.

To configure a resource pool, it is necessary to indicate the availability of absolute TTIs (for example, 10240 subframes) in the resource pool. In the technical solutions of the embodiments of the present disclosure, an array may be adopted to store the absolute TTIs within one SFN cycle of the resource pool, to indicate the logical TTIs in the absolute TTIs, and to calculate, based on the indicated logical TTIs, which logical TTI is an available TTI.

The LTE-V2X and the NR-V2X differ only in TTI granularity, while the storage method and the calculation method are the same. Here, a TTI (i.e. subframe) storage method in the LTE-V2X is used to illustrate the solutions of the embodiments of the present disclosure.

In embodiments of the present disclosure, absolute TTIs of a resource pool may include, but is not limited to, being stored in an array Pool[x]. The array may include x (x is 0 and is a positive integer) storage nodes, each storage node serving as a storage unit, x serving as an index number of each of the storage units, and the index numbers of a plurality of storage units being consecutive. Each of the storage units may include a first storage space and a second storage space, where the first storage space and the second storage space may be two storage variables of each storage node in the array. The first storage space is used for storing the total number of logical TTIs, and the second storage space is used for storing the absolute TTIs in the resource pool in the form of bits, and each bit indicates, through a preset first bit identifier, whether each stored absolute TTI is a logical TTI.

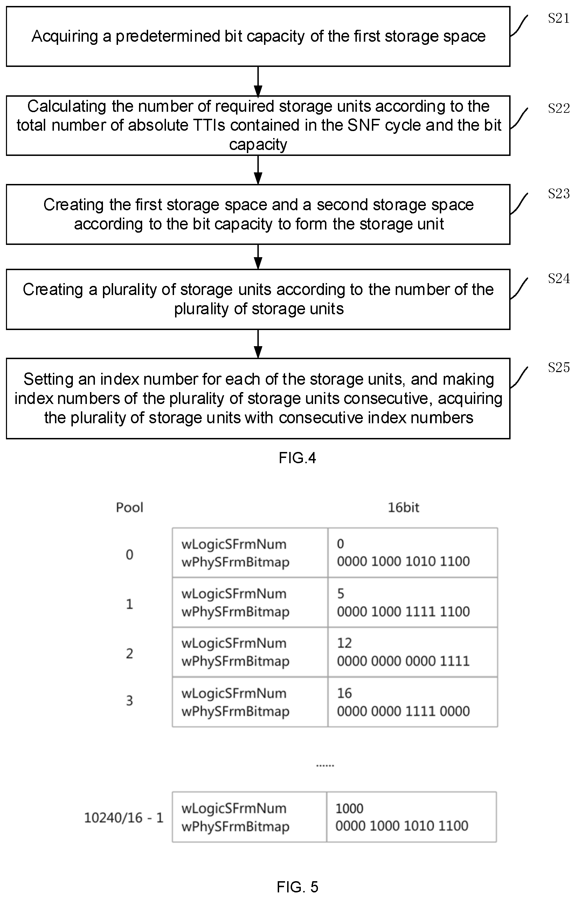

In embodiments of the present disclosure, as shown in Fig. 4, acquiring the plurality of storage units with consecutive index numbers may include steps S21-S25:

S21, acquiring a predetermined bit capacity of the first storage space.

In the embodiments of the present disclosure, the first storage space and the second storage space may have the same or different space sizes, and in order to facilitate computer calculation, the first storage space and the second storage space may be set to have the same space size.

In the embodiments of the present disclosure, since the first storage space is used to store a plurality of bits (which may be referred to as a bit stream), the space size of the first storage space is represented by the bit capacity.

In the embodiments of the present disclosure, the bit capacity (or referred to as a length) of the first storage space may include, but is not limited to, 16 bits, 32 bits, and the like, and may be correspondingly set according to a computer processing capability. For LTE-V2X, 16 bits is more suitable.

S22, calculating the number of required storage units according to the total number of absolute TTIs contained in the SNF cycle and the bit capacity.

In the embodiments of the present disclosure, for the LTE-V2X, in the case that one SNF cycle includes 10240 subframes and the bit capacity of the first storage space is 16, the number of storage units is 10240/16=640.

S23, creating the first storage space and a second storage space according to the bit capacity to form the storage unit.

In embodiments of the present disclosure, the first storage space may be represented by wPhySFrmBitmap, where wPhySFrmBitmap may be used to store a bit stream. The 16 bits in wPhySFrmBitmap represent 16 subframes, and each bit uses a corresponding first bit identifier to represent that an absolute subframe of the bit is a logical subframe or a non-logical subframe. The first bit identifier may include a first identifier and a second identifier, for example, the first identifier may be 1, the second identity may be 0, where 1 may represents a logical subframe, and 0 may represents a non-logical frame. The second storage space may be represented by wLogicSFrmNum, where wLogicSFrmNum may be used to store a decimal value, Pool[x].wLogicSFrmNum represents the total number of logical subframes in the 16*x subframes stored in the previous x-1 storage units of the x-th storage unit.

In the embodiments of the present disclosure, for example: Pool[0].wLogicSFrmNum = 0.

In the embodiments of the present disclosure; Pool[x]. wLogicSFrmNum = Pool[x - 1]. wLogicSFrmNum + CalclBit(Pool[x - 1]. wPhySFrmBitmap);

where Calc1Bit (bitmap) represents the number of bits in the bitmap code stream whose bit identifier is 1.

S24, creating a plurality of storage units according to the number of the plurality of storage units.

In the embodiments of the present disclosure, one SFN cycle contains 10240 subframes, and 640 storage units can be created according to the above calculation results.

S25, setting an index number for each of the storage units, and making index numbers of the plurality of storage units consecutive, acquiring the plurality of storage units with consecutive index numbers.

In the embodiments of the present disclosure, for 640 storage units, index numbers may be set starting from 0, and the index numbers are arranged sequentially, so that a maximum index number that can be set is 639, thereby acquiring an array with storage node index numbers ranging from 0 to 639.

In the embodiments of the present disclosure, a simple example of an array created according to the embodiments of the present disclosure may be shown in Fig. 5.

In the embodiments of the present disclosure, after the array is created, absolute TTIs (e.g. absolute subframes) of a resource pool can be sequentially stored into the wPhySFrmBitmap variable of 640 storage units in order, and whether a corresponding absolute TTI is a logical TTI (e.g. a logical subframe) is indicated by 1 or 0 in a bit stream of each wPhySFrmBitmap variable, thereby providing a basis for acquiring an available TTI.

In the embodiments of the present disclosure, in order to indicate the logical TTI in the wPhySFrmBitmap, the logical TTI needs to be identified in advance from the absolute TTI of the resource pool. The identification method is described in detail below.

In order to more flexibly indicate information about available subframes of a resource pool, a bitmap is used in LTE-V2X to indicate subframes of the resource pool, and each bit in the bitmap corresponds to one subframe. When the absolute subframes of the resource pool are determined, the bitmap is repeated periodically within an SFN cycle (one SFN cycle includes 10240 subframes), so that the information of the absolute subframes belonging to the resource pool within one SFN cycle can be determined.

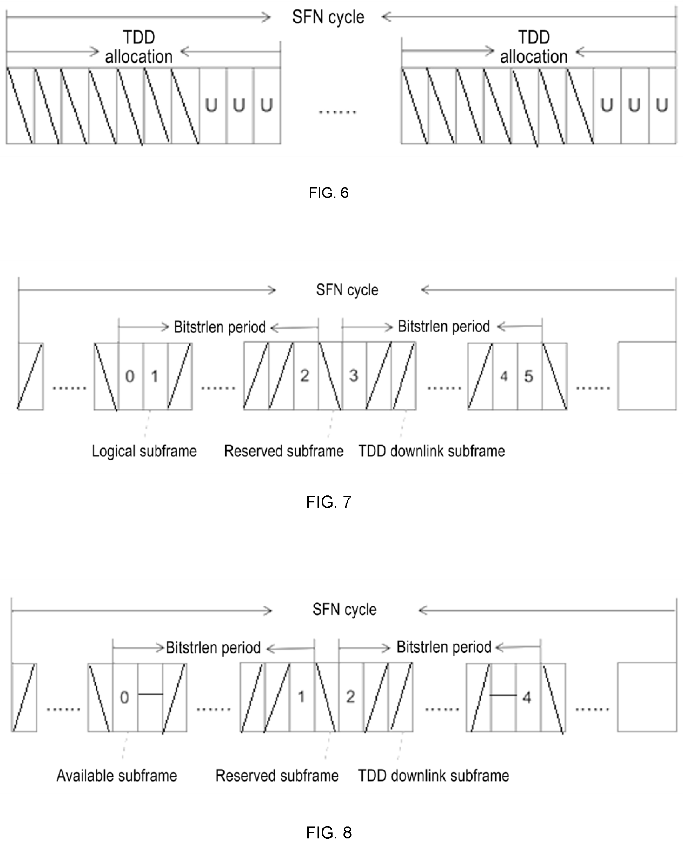

In the embodiments of the present disclosure, both the LTE-V2X and the NR-V2X can operate on ITS (Intelligent Transport System) dedicated frequency spectrum. At the same time, in order to expand the application scope of the V2X technology, both the LTE-V2X and the NR-V2X can coexist with LTE Uu (air interface) or NR Uu on licensed frequency bands. In order to avoid impact on the downlink receiver, the LTE-V2X and the NR-V2X can only operate on the uplink carrier or the uplink time domain resource. Therefore, in LTE-V2X, the downlink subframes and special subframes of the TDD system in the SFN cycle need to be removed. The allocation of subframes in a TDD system is flexible, with specific configurations determined by higher layers, and Fig. 6 shows a simple example.

Since it is necessary to periodically broadcast and receive a PSBCH (Physical Sidelink Broadcast Channel) synchronization signals, it is also necessary to remove synchronization subframes.

For the LTE-V2X, after removing synchronization subframes within one SFN cycle, if the remaining subframes cannot be evenly divided by the bitmap length bitstrlen (the bitstrlen is determined according to parameters carried in the received information), the positions of subframes belonging to the resource pool in different SFN cycles will be different. When the terminal receives the resource pool configuration information in different SFN cycles, the determined time domain positions of the resource pools will also differ, resulting in inconsistency in understanding of the resource pools between the terminals. In order to avoid this problem, it needs to be ensured that time domain resource positions determined according to the resource pool configuration information are the same across different SFN cycles. Therefore, with regard to LTE-V2X, reserved subframes are introduced, the reserved subframes are not used for sidelink transmission, and the function thereof is to enable the subframes, after removing synchronous subframes and downlink subframes from the total number of subframes in one SFN cycle, to be evenly divided by the length bitstrlen of a bitmap, so that time domain resources belonging to the resource pool in different SFN cycles are the same.

After excluding the reserved subframes, the remaining subframes are logical subframes. The logical subframe is transferred as a parameter in processes such as DMRS sequence generation, scrambling, and synchronization, and a mapping relationship between the logical subframe and an absolute subframe must be stored locally and numbered. An example of the arrangement is shown in Fig. 7.

Bitmap is a mapping performed on a logical subframe basis and is used for indicating whether the logical subframe is an available subframe. The length of the bitmap is bitstrlen, and an example of the arrangement of the available subframes is shown in Fig. 8.

Although data can only be sent and received on an available subframe, the available subframe does not need to be numbered. The judgement of the available subframe can be determined by taking the logical subframe number modulo bitstrlen, and querying whether a corresponding bit is 1 according to a modulus result to determine the available subframe (which will be introduced in detail in the subsequent content).

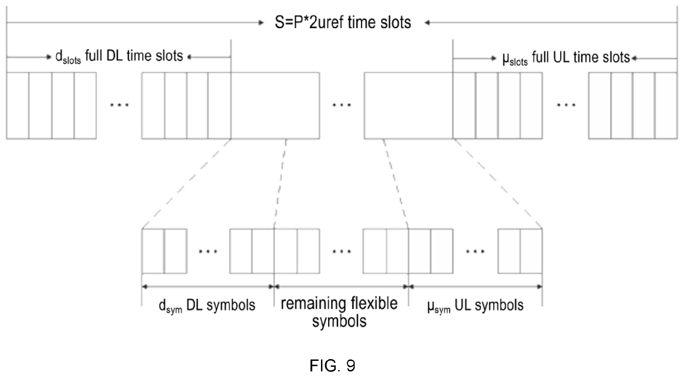

Compared with the LTE-V2X configuration, the NR-V2X is more flexible. The NR-V2X supports multiple sub-carrier intervals; the number of symbols of a single slot between different sub-carriers is consistent, both being 14. The larger the sub-carrier interval is, the shorter the unit time corresponding to the slot is. The number of slots within one SFN is $10240*2^u$, and the value of u is [0,4], which is determined by the sub-carrier interval. An NR system adopts a flexible time slot structure, meaning a time slot includes both uplink symbols and downlink symbols, and the number of uplink symbols used for sidelink transmission may be less than 14, thereby achieving more flexible scheduling. Uplink available resources are still decided by a TDD pattern, but the period cycle is flexible and variable, and are configured by high layers. The schematic diagram of the time slots within one TDD configuration period is shown in Fig. 9, and three symbols may exist in the middle time slots. As long as the number of the uplink symbols meets the transmission requirements of the time slot, the time slot can still be used as the logical slot.

The method for acquiring a logical TTI in the NR-V2X is basically the same as the method in the LTE-V2X, in which when excluding synchronization TTIs, the synchronization period is also flexibly configured by high layers. Overall, the logical slot calculation process of the NR-V2X is similar to that of the LTE-V2X, and will not be repeated redundantly here.

In the embodiments of the present disclosure, after a logical TTI is identified from absolute transmission time intervals (TTI) in a resource pool to be stored, the method further includes:

acquiring a number of each of the logical TTIs within the SNF cycle, and recording the number as an absolute TTI number of each of the logical TTIs; and

re-numbering the logical TTIs consecutively according to a sequential order of each of the logical TTIs within the SNF cycle, and acquiring a logical TTI number corresponding to each of the logical TTIs.

In the embodiments of the present disclosure, the absolute TTI number and the logical TTI number of each logical TTI can be acquired in advance, and the absolute TTI number and the logical TTI number of the same logical TTI are correspondingly stored, so as to prepare for subsequent calculations.

In the embodiments of the present disclosure, the counting a total number of the target TTIs stored in all storage units having index numbers less than a respective index number of each of the storage units may include:

acquiring the logical TTI number corresponding to the logical TTI stored in an immediately preceding storage unit of each of the storage units;

selecting a maximum logical TTI number from the acquired logical TTI numbers; and

taking a value corresponding to the maximum logical TTI number as a total number of the logical TTIs stored in all storage units having index numbers less than a respective index number of each of the storage units.

In the embodiments of the present disclosure, based on the set logical TTI number, the total number of logical TTIs stored in all the storage units preceding each of the storage units can be determined, and thus can be stored in the wLogicSFrmNum of the storage unit.

In the embodiments of the present disclosure, after absolute TTIs are stored in a plurality of wPhySFrmBitmap, the bit streams of the TTI within one SFN cycle of the resource pool in the wPhySFrmBitmap may all be initialized to 1, and the total number of logical TTIs in the wLogicSFrmNum is initialized to 0. After the total number of logical TTIs corresponding to each wLogicSFrmNum is counted, the total number of logical TTIs is stored in a corresponding wLogicSFrmNum, and according to an identified logical TTI, a bit identifier corresponding to the logical TTI in the wPhySFrmBitmap is reserved with 1, and a bit identifier of a non-logical TTI is modified to 0.

In the embodiments of the present disclosure, the available TTI may be acquired based on the set logical TTI number.

In the embodiments of the present disclosure, the storage unit further includes a third storage space, and both the first storage space and the third storage space may be bitmaps.

In the embodiments of the present disclosure, after storing the total number of the target TTIs counted for each of the storage units into the second storage space of a corresponding storage unit, the method further includes:

sequentially storing the logical subframes into a plurality of the third storage spaces according to an order of the logical TTI numbers;

where a bit capacity of each third storage space is a preset bit length, and each bit in the third storage space represents one logical TTI; for each bit, the second bit identifier indicates whether the bit to represents an available TTI or a non-available TTI.

In the embodiments of the present disclosure, the second bit identifier may include a third identifier and a fourth identifier, the third identifier indicates that the bit represents the available TTI, and the fourth identifier indicates that the bit represents the non-available TTI. For example, the third identifier may be 1, the fourth identifier may be 0, where 1 may be used to represent an available subframe, and 0 may be used to represent a non-available frame.

In the embodiments of the present disclosure, the method can further include:
detecting whether a logical TTI corresponding to an arbitrary logical TTI number is an available subframe, according to the arbitrary logical TTI number and the second bit identifiers in the plurality of third storage spaces.

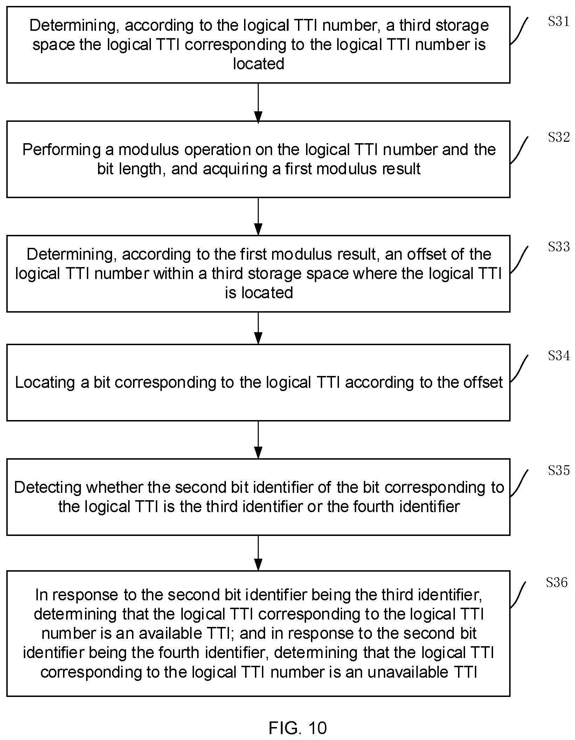

In the embodiments of the present disclosure, as shown in Fig. 10, the detecting whether a logical TTI corresponding to an arbitrary logical TTI number is an available subframe, according to the arbitrary logical TTI number and the second bit identifiers in the plurality of third storage spaces, including S31-S36:

S31, determining, according to the logical TTI number, a third storage space the logical TTI corresponding to the logical TTI number is located;

S32, performing a modulus operation on the logical TTI number and the bit length, and acquiring a first modulus result;

S33, determining, according to the first modulus result, an offset of the logical TTI number within a third storage space where the logical TTI is located;

S34, locating a bit corresponding to the logical TTI according to the offset;

S35, detecting whether the second bit identifier of the bit corresponding to the logical TTI is the third identifier or the fourth identifier;

S36, in response to the second bit identifier being the third identifier, determining that the logical TTI corresponding to the logical TTI number is an available TTI; and in response to the second bit identifier being the fourth identifier, determining that the logical TTI corresponding to the logical TTI number is an unavailable TTI.

In the embodiments of the present disclosure, by means of the described solution, whether a logical TTI is an available TTI can be found in a third storage space according to a logical TTI number of arbitrary logical TTI.

In the embodiments of the present disclosure, after storing the total number of the target TTIs counted for each of the storage units into the second storage space of a corresponding storage unit, the method further includes:

determining an absolute TTI number corresponding to an arbitrary logical TTI, according to the logical TTI number of the arbitrary logical TTI and an index number of a storage unit where the arbitrary logical TTI is located; and/or ,

determining the logical TTI number corresponding to the arbitrary logical TTI, according to the absolute TTI number corresponding to the arbitrary logical TTI and a bit capacity set for the first storage space.

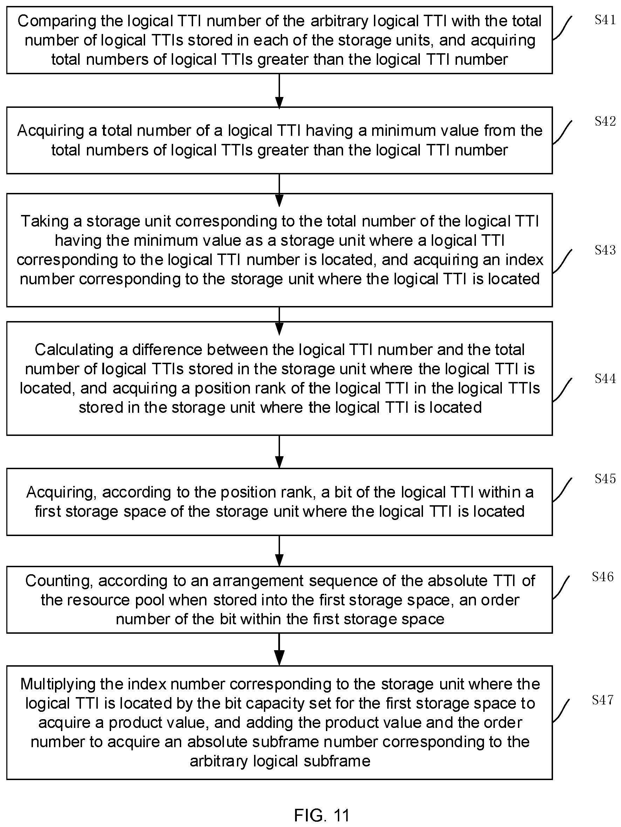

In the embodiments of the present disclosure, as shown in Fig. 11, the determining an absolute TTI number corresponding to an arbitrary logical TTI, according to the logical TTI number of the arbitrary logical TTI and an index number of a storage unit where the arbitrary logical TTI is located, including steps S41-S47:

S41, comparing the logical TTI number of the arbitrary logical TTI with the total number of logical TTIs stored in each of the storage units, and acquiring total numbers of logical TTIs greater than the logical TTI number;

S42, acquiring a total number of a logical TTI having a minimum value from the total numbers of logical TTIs greater than the logical TTI number;

S43, taking a storage unit corresponding to the total number of the logical TTI having the minimum value as a storage unit where a logical TTI corresponding to the logical TTI number is located, and acquiring an index number corresponding to the storage unit where the logical TTI is located;

S44, calculating a difference between the logical TTI number and the total number of logical TTIs stored in the storage unit where the logical TTI is located, and acquiring a position rank of the logical TTI in the logical TTIs stored in the storage unit where the logical TTI is located;

S45, acquiring, according to the position rank, a bit of the logical TTI within a first storage space of the storage unit where the logical TTI is located;

S46, counting, according to an arrangement sequence of the absolute TTI of the resource pool when stored into the first storage space, an order number of the bit within the first storage space;

S47, multiplying the index number corresponding to the storage unit where the logical TTI is located by the bit capacity set for the first storage space to acquire a product value, and adding the product value and the order number to acquire an absolute subframe number corresponding to the arbitrary logical subframe.

In the embodiments of the present disclosure, the TTI is still exemplified as a subframe for description. The absolute subframe is not necessarily a logical subframe, but the logical subframe is necessarily an absolute subframe. Finding the absolute subframe corresponding to the logical subframe is to find the index number of the storage unit where it is located and the offset of the bit in the first storage space of the storage unit it is located, according to the logical subframe number of the logical subframe. Although the logical subframe number is not directly stored in the resource pool Pool[x] and is periodically and indirectly stored in the form of the total number of logical subframes, the logical subframe numbers are arranged in ascending order. Based on this rule, the absolute subframe number corresponding to each logical subframe number can be acquired.

In the embodiments of the present disclosure, the absolute subframe number corresponding to the logical subframe number is acquired by using the second order search method. First, the index number of Pool[x] is determined in the total number of stored logical subframes by using the dichotomy, i.e., steps S41-S43, which means searching for the index number of Pool[x] satisfying the following expression:

$$\text{Pool}[x].\text{wLogicSFrmNum} \leq \text{LogicSFrm(logical subframe number)} < \text{Pool}[x + 1].\text{wLogicSFrmNum};$$

wherein, when LogicSFrm (logical subframe number) is greater than the maximum index number of the storage unit, the maximum index number 10240/Total (Pool[x].wPhySFrmBitmap)-1 of the storage unit may be acquired. Total (bitmap) represents the number of bits of a bitmap code stream, and Total(Pool[x].wPhySFrmBitmap) represents the number of bits in a bit stream stored by Pool[x].wPhySFrmBitmap. Pool[x].wPhySFrmBitmap is the number of bits (i.e. bit capacity) in each of the storage units, for example, 16 bits, and 10240/Total(Pool[x].wPhySFrmBitmap) is the number of storage units, subtracting 1 is because indexing starts from 0.

In the embodiments of the present disclosure, next, the bits of the logical subframe number LogicSFrm in the bit code stream stored in the first storage space of each of the storage units, i.e., the corresponding bit y of Pool[x].wPhySFrmBitmap, may be calculated.

Then the absolute subframe number corresponding to the logical subframe number LogicSFrm is, i.e., step S47:

AbsSFrm (Absolute Subframe Number) = x (Storage Unit Index Number acquired in the preceding steps) * Total (Pool[x].wPhySFrmBitmap) (Bit Capacity of one storage unit) + y.

In the embodiments of the present disclosure, before acquiring the bit y, it is also necessary to firstly acquire the position rank of the logical subframe among the logical subframe stored in the storage unit where the logical subframe is located (i.e. step S44), which can be acquired by the following calculation formula:

$$\text{LogicSFrm-Pool}[x].\text{wLogicSFrmNum} = \text{Calc1BitLow(Pool}[x].\text{wPhySFrmBitmap}, y);$$

wherein, Calc1BitLow (bitmap, m) represents calculating the number of bits with whose first bit identifier is 1 in the bitmap code stream from the first bit to the m-th bit (m is a positive integer). In the above expression, Calc1BitLow(Pool[x].wPhySFrmBitmap, y) represents, according to the storage order of absolute subframes, calculating the number of bits whose first bit identifier is 1 from the first bit to the y-th bit in the pool[x].wPhySFrmBitmap bitstream. This number is equal to the number of the logical subframes minus the total number of the logical subframes stored in the storage unit corresponding to the index number of the storage unit acquired in the above step.

In the embodiments of the present disclosure, the position rank calculated in the described steps is only the position rank calculated according to the stored logical subframes, the number of all bits starting from the first bit to the bit corresponding to the acquired rank also needs to be determined according to the rank, the order of the absolute subframes corresponding to the logical subframe in the storage unit, i.e., the order number described in the step S46, i.e., y in the above formula.

In the embodiments of the present disclosure, after y is calculated, the absolute subframe number may be acquired according to AbsSFrm (absolute subframe number) = x (index number of the storage unit acquired in the foregoing steps) * Total (Pool[x].wPhySFrmBitmap) (the bit capacity of one storage unit) + y.

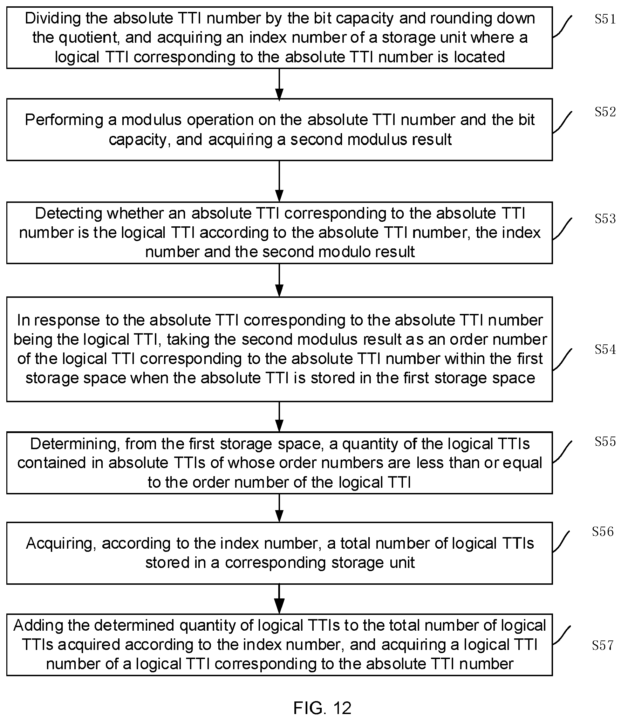

In the embodiments of the present disclosure, as shown in Fig. 12, the determining the logical TTI number corresponding to the arbitrary logical TTI, according to the absolute TTI number corresponding to the arbitrary logical TTI and a bit capacity set for the first storage space, including steps S51-S57:

S51, dividing the absolute TTI number by the bit capacity and rounding down the quotient, and acquiring an index number of a storage unit where a logical TTI corresponding to the absolute TTI number is located;

S52, performing a modulus operation on the absolute TTI number and the bit capacity, and acquiring a second modulus result;

S53, detecting whether an absolute TTI corresponding to the absolute TTI number is the logical TTI according to the absolute TTI number, the index number and the second modulo result;

S54, in response to the absolute TTI corresponding to the absolute TTI number being the logical TTI, taking the second modulus result as an order number of the logical TTI corresponding to the absolute TTI number within the first storage space when the absolute TTI is stored in the first storage space;

S55, determining, from the first storage space, a quantity of the logical TTIs contained in absolute TTIs of whose order numbers are less than or equal to the order number of the logical TTI;

S56, acquiring, according to the index number, a total number of logical TTIs stored in a corresponding storage unit;

S57, adding the determined quantity of logical TTIs to the total number of logical TTIs acquired according to the index number, and acquiring a logical TTI number of a logical TTI corresponding to the absolute TTI number.

In the embodiments of the present disclosure, the TTI is still exemplified as a subframe for description.

In the embodiments of the present disclosure, acquiring the logical subframe number essentially involves querying the corresponding logical subframe bit y in the resource pool Pool[x] wPhySFrmBitmap according to the absolute subframe number AbsSFrm.

In the embodiments of the present disclosure, the index number of the storage unit where the corresponding absolute subframe is located may be acquired firstly according to the absolute subframe number (i.e. step S51), and the following expression may be used:

x (index number of the storage unit where it is located) = AbsSFrm (absolute subframe number) / Total(Pool[x]. wPhySFrmBitmap);

where Total(Pool[x].wPhySFrmBitmap) represents the number of bits, e.g. 16 bits, in the bitstream stored by Pool [x].wPhySFrmBitmap.

In the embodiments of the present disclosure, after acquiring the index number of the storage unit where the absolute subframe is located, whether the corresponding absolute subframe is a logical subframe may be firstly judged according to the index number and the absolute subframe number, if it is a logical subframe, the corresponding logical subframe number may be further determined, and if it is not a logical subframe, the logical subframe number does not need to be determined.

In the embodiments of the present disclosure, before judging whether it is a logical subframe, a modulus operation is further performed on the absolute TTI number and the bit capacity to acquire a second modulus result (i.e. step S52), and when judging whether the subframe is a logical subframe, the second modulus result is needed.

In the embodiments of the present disclosure, performing the modulus operation on the absolute TTI number and the bit capacity to acquire the second modulo result can be expressed as:

$$\text{AbsSFrm \% Total(Pool[x].wPhySFrmBitmap)};$$

where % is the modulus symbol, and Total(Pool[x].wPhySFrmBitmap) can be 16.

In the embodiments of the present disclosure, the absolute subframe number and 16 may be modulo to acquire the second modulo result.

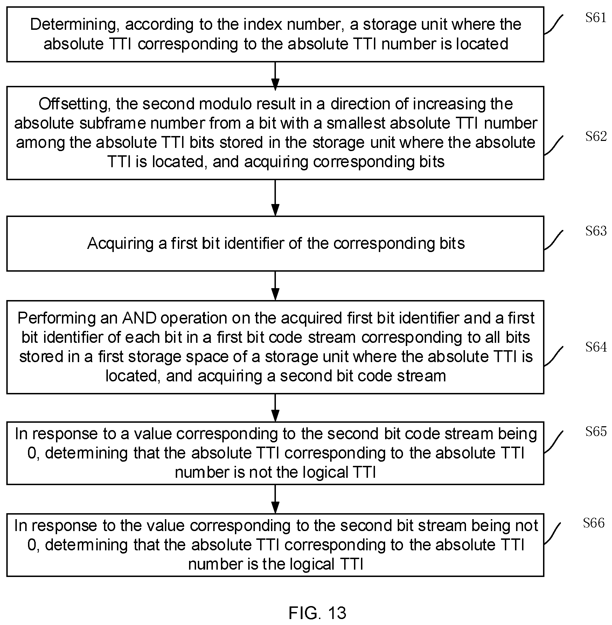

In the embodiments of the present disclosure, as shown in Fig. 13, the detecting whether an absolute TTI corresponding to the absolute TTI number is the logical TTI according to the absolute TTI number, the index number and the second modulo result including steps S61-S66:

S61, determining, according to the index number, a storage unit where the absolute TTI corresponding to the absolute TTI number is located;

S62, offsetting, the second modulo result in a direction of increasing the absolute subframe number from a bit with a smallest absolute TTI number among the absolute TTI bits stored in the storage unit where the absolute TTI is located, and acquiring corresponding bits;

S63, acquiring a first bit identifier of the corresponding bits;

S64, performing an AND operation on the acquired first bit identifier and a first bit identifier of each bit in a first bit code stream corresponding to all bits stored in a first storage space of a storage unit where the absolute TTI is located, and acquiring a second bit code stream;

S65, in response to a value corresponding to the second bit code stream being 0, determining that the absolute TTI corresponding to the absolute TTI number is not the logical TTI;

S66, in response to the value corresponding to the second bit stream being not 0, determining that the absolute TTI corresponding to the absolute TTI number is the logical TTI.

In the embodiments of the present disclosure, the TTI is still exemplified as a subframe for description.

In the embodiments of the present disclosure, the storage unit where the absolute subframe corresponding to the absolute subframe number is located can be acquired according to the index number (e.g., 36) determined according to the foregoing scheme, the first bit may be determined from the 36th storage unit according to the order of storage of the absolute subframes, that is, the bit with the minimum absolute subframe number starts from the bit with the minimum absolute subframe number, offset towards the direction of increasing the absolute subframe number (i.e. offsetting according to the storage order of the absolute subframes), and offset the second modulus result bit. For example, if the second modulus result is 3, offset by 3 bits, which may reach the 4th bit. In this case, the first bit identifier corresponding to the 4th bit in the bit code stream (which may be referred to as bit code stream 1 for short) stored in the first storage space of the 36th storage unit may be acquired, the first bit identifier may be 1 or 0.

In the embodiments of the present disclosure, an expression for performing bit offsetting may be as follows:

$$1 << (\text{AbsSFrm \% Total(Pool[x].wPhySFrmBitmap)});$$

where AbsSFrm % Total(Pool[x].wPhySFrmBitmap) represents the second modulo result, "<<" is a left-offset sign (embodiments of the present disclosure may include, but are not limited to, employing a left-offset sign, a right offset symbol may also be used, and a suitable offset order number may be selected according to requirements and a preset search order), "1" refers to starting from the first bit of the bit code stream 1 (generally starting from the rightmost first bit of the code stream; this is not limited here and can be defined as needed), and offsetting by (AbsSFrm %

$$\text{Total(Pool[x].wPhySFrmBitmap)) bits}.$$

In the embodiments of the present disclosure, an AND operation can be performed on the first bit identifier of each bit in the bit code stream 1 and the first bit identifier of the 4th bit, so as to acquire a second bit code stream (which can be referred to as bit code stream 2 for short), and an expression can be expressed as:

Pool[x].wPhySFrmBitmap(here refers to bit code stream 1) & (1 << (AbsSFrm % Total(Pool[x].wPhySFrmBitmap))).

In the embodiments of the present disclosure, if each bit in the bit code stream 2 is 0, the numerical value corresponding to the bit code stream 2 is 0, and if any bit in the bit code stream 2 is not 0, the numerical value corresponding to the bit code stream 2 is not 0.

In the embodiments of the present disclosure, in the case that the numerical value corresponding to the bit code stream 2 is 0, it is determined that the absolute subframe corresponding to the absolute subframe number is not a logical subframe; in the case that the numerical value corresponding to the bit code stream 2 is not 0, it is determined that the absolute subframe corresponding to the absolute subframe number is a logical subframe.

In the embodiments of the present disclosure, in the case that it is determined that the absolute subframe corresponding to the absolute subframe number is a logical subframe, the logical subframe number corresponding to the absolute subframe number may be further acquired.

In the embodiments of the present disclosure, since the second modulus result is the remainder acquired by dividing the absolute subframe number by the bit capacity, the remainder is the storage order number (i.e. an order number) of the corresponding absolute subframe in the first storage space of the storage unit, therefore, the second modulus result may be used as the order number of the logical TTI in the first storage space corresponding to the absolute TTI number when the absolute TTI is stored in the first storage space (i.e. step S54).

In the embodiments of the present disclosure, after acquiring the order number of the absolute subframe in the first storage space, it can be further determined which logical subframe this order number corresponds to. Thus, the order number of the corresponding logical subframe in the first storage space can be determined, and the number of logical subframes included in absolute subframes having the order numbers smaller than or equal to the order number of the logical subframe can be determined from the first storage space. Adding this number to the total number of the logical subframes stored in the storage unit corresponding to the determined index number yields the logical subframe number corresponding to the absolute subframe number (i.e. steps S56-S57). In the embodiments of the present disclosure, LogicSFrm(logical subframe number) = Pool[x].wLogicSFrmNum + Calc1BitLow(Pool[x].wPhySFrmBitmap, AbsSFrm % Total(Pool[x].wPhySFrmBitmap));

where Pool[x].wLogicSFrmNum is the total number of logical subframes stored in the storage unit corresponding to the determined index number;

Calc1 BitLow(Pool[x].wPhySFrmBitmap, AbsSFrm % Total(Pool[x].wPhySFrmBitmap)) refers to calculating the number of bits that are 1 from the first bit to the AbsSFrmTotal(Pool[x].wPhySFrmBitmap)-th bit in the bit code streams in Pool[x].wPhySFrmBitmap, i.e., the number of logical subframes.

II. The detailed solution of TTI storage applied to the scenario of a plurality of resource pools will be introduced below.

In the embodiments of the present disclosure, the TTI here may also be a subframe or a time slot, which will not be repeated here.

In the embodiments of the present disclosure, in the LTE-V2X, if a first storage space of 16 bits is used to store data, the memory of a single resource pool can be compressed eight times, and the compressed single resource pool occupies 5K (kilo) bytes. Considering that LTE-V2X has at most 25 resource pools, the total cost is still very large. A linked list may be considered to store resource pools configured by high layers to reduce unnecessary waste. Alternatively, a multiple resource pool multiplexing may be adopted, where the absolute TTIs of multiple resource pools (retaining reserved TTIs) after removing synchronization TTIs, downlink TTIs, and special TTIs are stored in a common resource pool. The difference in calculating logical subframes between individual resource pools includes reserved subframes determined according to the bit length bitstrlen. A single resource pool can store data before the reserved subframes are deleted, and record the bitstrlen value, so that the number of reserved subframes to be deleted can be calculated according to the prior art, and the logical subframe is acquired. It is known that deletion of the reserved subframe is explicitly specified by the protocols and has formulas to follow, which will not be detailed here.

In the embodiments of the present disclosure, the resource pool is a plurality of resource pools; the target TTIs are logical TTIs and reserved TTIs contained in the plurality of resource pools; the target TTI is placed in a preset common resource pool;

after acquiring a target TTI from absolute transmission time intervals (TTI) in a resource pool to be stored, the method further includes:

re-numbering the logical TTIs and the reserved TTIs consecutively according to a sequential order of each of the logical TTIs and the reserved TTIs within the common resource pool, and acquiring a virtual number corresponding to each of the logical TTIs and the reserved TTIs.

In the embodiments of the present disclosure, the method further includes:

judging whether a target TTI corresponding to an arbitrary virtual number is the logical TTI, according to the arbitrary virtual number, a total number of virtual numbers, a total number of the reserved TTIs and a first calculation formula;

in response to determining that the target TTI corresponding to the arbitrary virtual number is the logical TTI, calculating a difference value between the arbitrary virtual number and a corresponding logical TTI number according to the arbitrary virtual number, the total number of virtual numbers, the total number of the reserved TTIs and a second calculation formula;

calculating a logical TTI number corresponding to the arbitrary virtual number, according to the arbitrary virtual number and the difference value.

In the embodiments of the present disclosure, the key now is that if the current resource pool includes a plurality of sub-resource pools and a common resource pool, the common resource pool is used for storing the TTIs (i.e. a logical TTIs and reserved TTIs), of the multiple resource pools after removing synchronization TTIs, downlink TTIs, and special TTIs. Each target TTI has a corresponding virtual number in a common resource pool, and when the TTIs of the plurality of resource pools are stored according to the solution of the above embodiment of the present disclosure, whether any one of the target TTIs is a logical TTI may be determined according to the virtual number.

In embodiments of the present disclosure, the first calculation formula comprises: $a\%|n/k|$; wherein, a is the virtual number, n is the total number of the virtual numbers, k is the total number of the reserved TTIs, % denotes modulus, / is a division sign, and $|n/k|$ means rounding down n/k;

In the embodiments of the present disclosure, the judging whether a target TTI corresponding to an arbitrary virtual number is the logical TTI, according to the arbitrary virtual number, a total number of virtual numbers, a total number of the reserved TTIs and a first calculation formula includes:

substituting the arbitrary virtual number, the total number of the virtual numbers and the total number of the reserved TTIs into the first calculation formula;

in response to a calculated numerical value of the first calculation formula being 0, determining that the target TTI corresponding to the arbitrary virtual number is not the logical TTI;

in response to the calculated numerical value of the first calculation equation being not 0, determining that the target TTI corresponding to the arbitrary virtual number is the logical TTI.

In the embodiments of the present disclosure, after determining that a target TTI corresponding to a certain virtual number is a logical TTI according to the described solution, the logical TTI number of the logical TTI may be further determined.

In the embodiments of the present disclosure, the difference value between the virtual number and the corresponding logical TTI number can be calculated according to a preset second calculation formula. Tnd the second calculation formula includes: $p = a/|n/k|+1$; wherein p is the difference value between the virtual number and the corresponding logical TTI number. The logical TTI number is then equal to the virtual number plus this difference p.

In the embodiments of the present disclosure, after the difference is acquired, the difference may be stored, and when the logical TTI number of a certain logical TTI is known, the corresponding virtual number may be calculated according to the difference P and the logical TTI number.

In the embodiments of the present disclosure, the above solution may multiplex the resource pools under the same TDD mode. The LTE-V2X has at most 25 resource pools, which can be compressed up to 25 times, saving a space of 100K bytes.

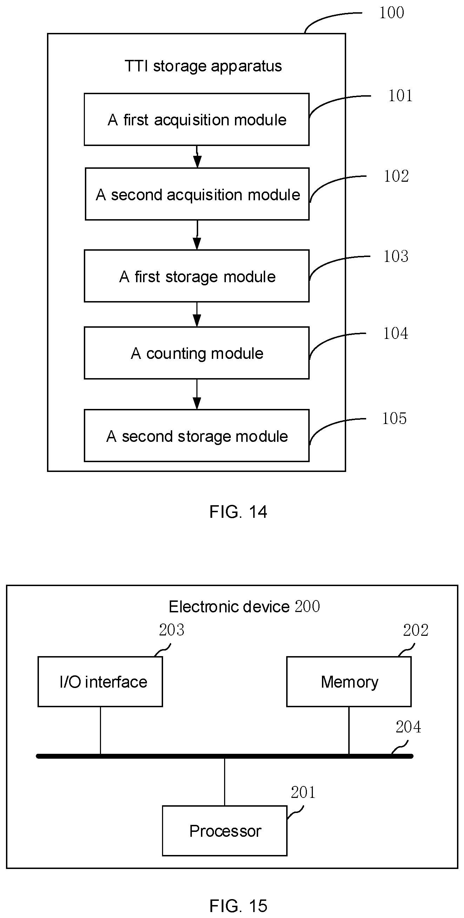

The embodiments of the present disclosure further provide a TTI storage apparatus 100, as shown in Fig. 14, including:

a first acquisition module 101, configured to acquire a plurality of storage units with consecutive index numbers; wherein each of the storage units comprises a first storage space and a second storage space;

a second acquisition module 102, configured to acquire a target TTI from absolute transmission time intervals (TTI) in a resource pool to be stored; wherein the absolute TTI refers to an arbitrary TTI contained in the resource pool;

a first storage module 103, configured to sequentially store the absolute TTIs into the first storage spaces of the plurality of storage units according to an order of the absolute TTIs within a System Frame Number (SNF) cycle; wherein the first storage space comprises a plurality of bits, and each bit represents a TTI; for each bit, a preset bit identifier indicates whether the bit represents the target TTI or a non-target TTI;

a counting module 104, configured to count a total number of the target TTIs stored in all storage units having index numbers less than a respective index number of each of the storage units;

a second storage module 105, configured to store the total number of the target TTIs counted for each of the storage units into the second storage space of a corresponding storage unit.

The embodiments of the present disclosure further provide an electronic device 200. As shown in Fig. 15, the electronic device 200 includes:

one or more processors 201;

a memory 202, having one or more programs stored therein, wherein the one or more programs are configured to, when executed by one or more processors 201, cause the one or more processors 201 to implement the TTI storage method; and

one or more input/output (I/O) interfaces 203, connected between the processor 201 and the memory 202, and configured to implement information interaction between the processor 201 and the memory 202.

The processor 201 is a device having a data processing capability, and includes, but is not limited to, a central processing unit (CPU), and the like. The memory 202 is a device having data storage capability, and includes, but is not limited to, a random access memory (RAM, more specifically, an SDRAM, a DDR, and the like), a read-only memory (ROM), an electrically erasable programmable read-only memory (EEPROM), and a flash memory (FLASH). The I/O interface (read/write interface) 203 is connected between the processor 201 and the memory 202, and can implement information interaction between the processor 201 and the memory 202. The I/O interface includes, but is not limited to, a data bus, and the like.

In some embodiments, the processor 201, memory 202, and I/O interface 203 are interconnected by a bus 204, which in turn is connected to other components of the computing device.

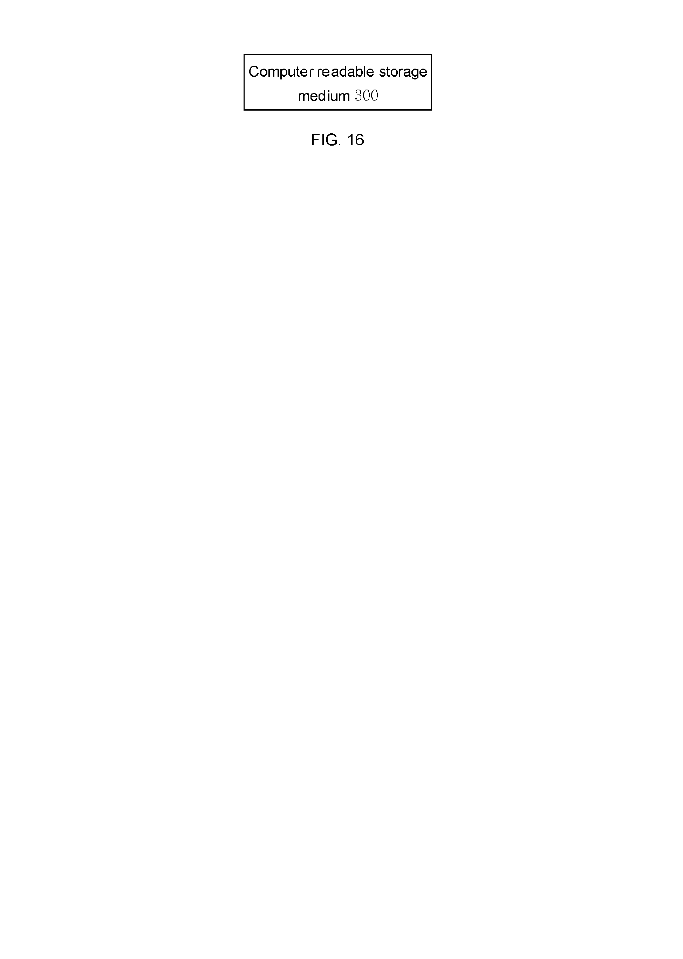

Fourth aspect, some embodiments of the present disclosure provide a computer readable storage medium 300. As shown in Fig. 16, the computer readable storage medium 300 having a computer program stored therein, and the computer program is configured to, when the computer program is executed by a processor, implements the TTI storage method.

Those skilled in the art can appreciate that the functional blocks/units in all or some of the steps, systems, and apparatuses disclosed above can be implemented as software, firmware, hardware, and any suitable combination thereof.

In a hardware implementation, the division between functional modules/units referred to in the above description does not necessarily correspond to the division of physical components; for example, one physical component may have multiple functions, or one function or step may be cooperatively performed by several physical components.

Some or all of the physical components may be implemented as software executed by a processor, such as a central processing unit (CPU), digital signal processor, or microprocessor, or as hardware, or as an integrated circuit, such as an application specific integrated circuit. Such software may be distributed on computer readable media, which may include computer storage media (or non-transitory media) and communication media (or transitory media). As is well known to those skilled in the art, the term computer storage media includes both volatile and nonvolatile, removable and non-removable media implemented in any method or technology for storage of information (such as computer readable instructions, data structures, program modules, or other data). Computer storage media includes, but is not limited to, random access memory (RAM, more specifically, an SDRAM, a DDR, and the like), read only memory (ROM), electrically erasable programmable read only memory (EEPROM), flash memory (FLASH), or other magnetic disk memory; a compact disc-read only memory (CD-ROM), a digital versatile disc (DVD) or other optical disc storage; magnetic cassettes, magnetic tape, magnetic disk storage or other magnetic storage; any other medium that can be used to store the desired information and that can be accessed by the computer. In addition, as is well known to those skilled in the art, communication media typically embodies computer readable instructions, data structures, program modules, or other data in a modulated data signal, such as a carrier wave or other transport mechanism, and may include any information delivery media.

The present disclosure has disclosed example embodiments, and although specific terms are employed, they are used and should only be interpreted in a generic and descriptive sense, and not for purposes of limitation. In some instances, as would be apparent to one skilled in the art, features, characteristics, and/or elements described in connection with a particular embodiment may be used alone or in combination with features, characteristics, and/or elements described in connection with other embodiments unless specifically indicated otherwise. Therefore, those skilled in the art will understand that various changes in form and details may be made therein without departing from the scope of the present disclosure as set forth in the appended claims.

**Claims**

1. A TTI storage method, comprising:

   acquiring a plurality of storage units with consecutive index numbers; wherein each of the storage units comprises a first storage space and a second storage space;
   acquiring a target TTI from absolute transmission time intervals (TTI) in a resource pool to be stored; wherein the absolute TTI refers to an arbitrary TTI contained in the resource pool;
   sequentially storing the absolute TTIs into the first storage spaces of the plurality of storage units according to an order of the absolute TTIs within a System Frame Number (SNF) cycle;
   wherein the first storage space comprises a plurality of bits, and each bit represents a TTI; for each bit, a preset bit identifier indicates whether the bit represents the target TTI or a non-target TTI;
   counting a total number of the target TTIs stored in all storage units having index numbers less than a respective index number of each of the storage units; and
   storing the total number of the target TTIs counted for each of the storage units into the second storage space of a corresponding storage unit.

2. The TTI storage method according to claim 1, wherein the resource pool is a single resource pool; the target TTI is a logical TTI; the logical TTI refers to an absolute TTI which can be used for transmitting uplink data;

   the bit identifier comprises a first bit identifier, the first bit identifier comprises a first identifier and a second identifier, the first identifier indicates that the bit represents the logical subframe TTI, and the second identifier indicates that the bit represents a non-logical TTI;
   after acquiring a target TTI from absolute transmission time intervals (TTI) in a resource pool to be stored, the method further comprises:

      acquiring a number of each of the logical TTIs within the SNF cycle, and recording the number as an absolute TTI number of each of the logical TTIs; and
      re-numbering the logical TTIs consecutively according to a sequential order of each of the logical TTIs within the SNF cycle, and acquiring a logical TTI number corresponding to each of the logical TTIs.

3. The TTI storage method according to claim 2, wherein the counting a total number of the target TTIs stored in all storage units having index numbers less than a respective index number of each of the storage units comprises:

   acquiring the logical TTI number corresponding to the logical TTI stored in an immediately preceding storage unit of each of the storage units;
   selecting a maximum logical TTI number from the acquired logical TTI numbers; and
   taking a value corresponding to the maximum logical TTI number as a total number of the logical TTIs stored in all storage units having index numbers less than a respective index number of each of the storage units.

4. The TTI storage method according to claim 2, wherein the storage unit further comprises a third storage space, and the bit identifier further comprises a second bit identifier;
   after storing the total number of the target TTIs counted for each of the storage units into the second storage space of a corresponding storage unit, the method further comprises:

   sequentially storing the logical subframes into a plurality of the third storage spaces according to an order of the logical TTI numbers;
   wherein a bit capacity of each third storage space is a preset bit length, and each bit in the third storage space represents one logical TTI; for each bit, the second bit identifier indicates whether the bit to represents an available TTI or a non-available TTI.

5. The TTI storage method according to claim 4, further comprising:
detecting whether a logical TTI corresponding to an arbitrary logical TTI number is an available subframe, according to the arbitrary logical TTI number and the second bit identifiers in the plurality of third storage spaces.

6. The TTI storage method according to claim 5, wherein the second bit identifier comprises a third identifier and a fourth identifier; the third identifier indicates that the bit represents the available TTI, and the fourth identifier indicates that the bit represents the non-available TTI;
the detecting whether a logical TTI corresponding to an arbitrary logical TTI number is an available subframe, according to the arbitrary logical TTI number and the second bit identifiers in the plurality of third storage spaces comprises:

determining, according to the logical TTI number, a third storage space the logical TTI corresponding to the logical TTI number is located;
performing a modulus operation on the logical TTI number and the bit length, and acquiring a first modulus result;
determining, according to the first modulus result, an offset of the logical TTI number within a third storage space where the logical TTI is located;
locating a bit corresponding to the logical TTI according to the offset;
detecting whether the second bit identifier of the bit corresponding to the logical TTI is the third identifier or the fourth identifier;
in response to the second bit identifier being the third identifier, determining that the logical TTI corresponding to the logical TTI number is an available TTI; and
in response to the second bit identifier being the fourth identifier, determining that the logical TTI corresponding to the logical TTI number is an unavailable TTI.

7. The TTI storage method according to claim 2, wherein after storing the total number of the target TTIs counted for each of the storage units into the second storage space of a corresponding storage unit, the method further comprises:

determining an absolute TTI number corresponding to an arbitrary logical TTI, according to the logical TTI number of the arbitrary logical TTI and an index number of a storage unit where the arbitrary logical TTI is located; and/or,
determining the logical TTI number corresponding to the arbitrary logical TTI, according to the absolute TTI number corresponding to the arbitrary logical TTI and a bit capacity set for the first storage space.

8. The TTI storage method according to claim 7, wherein the determining an absolute TTI number corresponding to an arbitrary logical TTI, according to the logical TTI number of the arbitrary logical TTI and an index number of a storage unit where the arbitrary logical TTI is located, comprises:

comparing the logical TTI number of the arbitrary logical TTI with the total number of logical TTIs stored in each of the storage units, and acquiring total numbers of logical TTIs greater than the logical TTI number;
acquiring a total number of a logical TTI having a minimum value from the total numbers of logical TTIs greater than the logical TTI number;
taking a storage unit corresponding to the total number of the logical TTI having the minimum value as a storage unit where a logical TTI corresponding to the logical TTI number is located, and acquiring an index number corresponding to the storage unit where the logical TTI is located;
calculating a difference between the logical TTI number and the total number of logical TTIs stored in the storage unit where the logical TTI is located, and acquiring a position rank of the logical TTI in the logical TTIs stored in the storage unit where the logical TTI is located;
acquiring, according to the position rank, a bit of the logical TTI within a first storage space of the storage unit where the logical TTI is located;
counting, according to an arrangement sequence of the absolute TTI of the resource pool when stored into the first storage space, an order number of the bit within the first storage space; and
multiplying the index number corresponding to the storage unit where the logical TTI is located by the bit capacity set for the first storage space to acquire a product value, and adding the product value and the order number to acquire an absolute subframe number corresponding to the arbitrary logical subframe.

9. The TTI storage method according to claim 7, wherein the determining the logical TTI number corresponding to the arbitrary logical TTI, according to the absolute TTI number corresponding to the arbitrary logical TTI and a bit capacity set for the first storage space comprises:

dividing the absolute TTI number by the bit capacity and rounding down the quotient, and acquiring an index number of a storage unit where a logical TTI corresponding to the absolute TTI number is located;

performing a modulus operation on the absolute TTI number and the bit capacity, and acquiring a second modulus result;

detecting whether an absolute TTI corresponding to the absolute TTI number is the logical TTI according to the absolute TTI number, the index number and the second modulo result;

in response to the absolute TTI corresponding to the absolute TTI number being the logical TTI, taking the second modulus result as an order number of the logical TTI corresponding to the absolute TTI number within the first storage space when the absolute TTI is stored in the first storage space;

determining, from the first storage space, a quantity of the logical TTIs contained in absolute TTIs of whose order numbers are less than or equal to the order number of the logical TTI;

acquiring, according to the index number, a total number of logical TTIs stored in a corresponding storage unit;

adding the determined quantity of logical TTIs to the total number of logical TTIs acquired according to the index number, and acquiring a logical TTI number of a logical TTI corresponding to the absolute TTI number.

10. The TTI storage method according to claim 9, wherein the detecting whether an absolute TTI corresponding to the absolute TTI number is the logical TTI according to the absolute TTI number, the index number and the second modulo result comprises:

determining, according to the index number, a storage unit where the absolute TTI corresponding to the absolute TTI number is located;

offsetting, the second modulo result in a direction of increasing the absolute subframe number from a bit with a smallest absolute TTI number among the absolute TTI bits stored in the storage unit where the absolute TTI is located, and acquiring corresponding bits;

acquiring a first bit identifier of the corresponding bits;

a first bit identifier performing an AND operation on the acquired first bit identifier and a first bit identifier of each bit in a first bit code stream corresponding to all bits stored in a first storage space of a storage unit where the absolute TTI is located, and acquiring a second bit code stream;

in response to a value corresponding to the second bit code stream being 0, determining that the absolute TTI corresponding to the absolute TTI number is not the logical TTI;

in response to the value corresponding to the second bit stream being not 0, determining that the absolute TTI corresponding to the absolute TTI number is the logical TTI.

11. The TTI storage method according to claim 1, wherein the resource pool is a plurality of resource pools; the target TTIs are logical TTIs and reserved TTIs contained in the plurality of resource pools; the target TTI is placed in a preset common resource pool;

after acquiring a target TTI from absolute transmission time intervals (TTI) in a resource pool to be stored, the method further comprises:

re-numbering the logical TTIs and the reserved TTIs consecutively according to a sequential order of each of the logical TTIs and the reserved TTIs within the common resource pool, and acquiring a virtual number corresponding to each of the logical TTIs and the reserved TTIs.

12. The TTI storage method according to claim 11, further comprising:

judging whether a target TTI corresponding to an arbitrary virtual number is the logical TTI, according to the arbitrary virtual number, a total number of virtual numbers, a total number of the reserved TTIs and a first calculation formula;

in response to determining that the target TTI corresponding to the arbitrary virtual number is the logical TTI, calculating a difference value between the arbitrary virtual number and a corresponding logical TTI number according to the arbitrary virtual number, the total number of virtual numbers, the total number of the reserved TTIs and a second calculation formula;

calculating a logical TTI number corresponding to the arbitrary virtual number, according to the arbitrary virtual number and the difference value.

13. The TTI storage method according to claim 12, wherein the first calculation formula comprises: $a\%|n/k|$; wherein, a is the virtual number, n is the total number of the virtual numbers, k is the total number of the reserved TTIs, % denotes modulus, / is a division sign, and $|n/k|$ means rounding down n/k;

the judging whether a target TTI corresponding to an arbitrary virtual number is the logical TTI, according to the arbitrary virtual number, a total number of virtual numbers, a total number of the reserved TTIs and a first calculation formula comprises:

substituting the arbitrary virtual number, the total number of the virtual numbers and the total number of the reserved TTIs into the first calculation formula;

in response to a calculated numerical value of the first calculation formula being 0, determining that the target TTI corresponding to the arbitrary virtual number is not the logical TTI;

in response to the calculated numerical value of the first calculation equation being not 0, determining that the target TTI corresponding to the arbitrary virtual number is the logical TTI.

14. The TTI storage method according to claim 12, wherein the second calculation formula comprises: $p = a/|n/k|+1$; wherein p is the difference value.

15. A TTI storage apparatus, comprising:

a first acquisition module, configured to acquire a plurality of storage units with consecutive index numbers; wherein each of the storage units comprises a first storage space and a second storage space;

a second acquisition module, configured to acquire a target TTI from absolute transmission time intervals (TTI) in a resource pool to be stored; wherein the absolute TTI refers to an arbitrary TTI contained in the resource pool;

a first storage module, configured to sequentially store the absolute TTIs into the first storage spaces of the plurality of storage units according to an order of the absolute TTIs within a System Frame Number (SNF) cycle; wherein the first storage space comprises a plurality of bits, and each bit represents a TTI; for each bit, a preset bit identifier indicates whether the bit represents the target TTI or a non-target TTI;

a counting module, configured to count a total number of the target TTIs stored in all storage units having index numbers less than a respective index number of each of the storage units;

a second storage module, configured to store the total number of the target TTIs counted for each of the storage units into the second storage space of a corresponding storage unit.

16. An electronic device, comprising:

one or more processors;

a memory, having one or more programs stored therein, wherein the one or more programs are configured to, when executed by the one or more processors, cause the one or more processors to implement the TTI storage method as claimed in any one of claims 1 to 14; and

one or more input/output (I/O) interfaces, connected between the processor and the memory, and configured to implement information interaction between the processor and the memory.

17. A computer readable storage medium, wherein the computer readable storage medium stores a computer program, and the computer program is configured to, when the computer program is executed by a processor, implements the TTI storage method as claimed in any one of claims 1 to 14.

| 0 | 1 | 2 | 3 | 4 | 5 | 6 | | 10239 | |
|---|---|---|---|---|---|---|---|---|---|
| 65535 | 65535 | 0 | 1 | 65535 | 65535 | 3 | ...... | 3000 | 65535 |

FIG. 1

| 0 | 1 | 2 | 3 | 4 | | 10240*2^u-1 |
|---|---|---|---|---|---|---|
| 0xFFFF FFFF FFFF FFFF | 0xFFFF FFFF FFFF FFFF | 0 | 1 | 0xFFFF FFFF FFFF FFFF | ...... | 0xFFFF FFFF FFFF FFFF |

FIG. 2

Acquiring a plurality of storage units with consecutive index numbers; where each of the storage units includes a first storage space and a second storage space — S11

Acquiring a target TTI from absolute transmission time intervals (TTI) in a resource pool to be stored; where the absolute TTI refers to an arbitrary TTI contained in the resource pool — S12

Sequentially storing the absolute TTIs into the first storage spaces of the plurality of storage units according to an order of the absolute TTIs within a System Frame Number (SNF) cycle; where the first storage space includes a plurality of bits, and each bit represents a TTI; for each bit, a preset bit identifier indicates whether the bit represents the target TTI or a non-target TTI — S13

Counting a total number of the target TTIs stored in all storage units having index numbers less than a respective index number of each of the storage units — S14

Storing the total number of the target TTIs counted for each of the storage units into the second storage space of a corresponding storage unit — S15

FIG. 3

Acquiring a predetermined bit capacity of the first storage space $\quad$ S21

Calculating the number of required storage units according to the total number of absolute TTIs contained in the SNF cycle and the bit capacity $\quad$ S22

Creating the first storage space and a second storage space according to the bit capacity to form the storage unit $\quad$ S23

Creating a plurality of storage units according to the number of the plurality of storage units $\quad$ S24

Setting an index number for each of the storage units, and making index numbers of the plurality of storage units consecutive, acquiring the plurality of storage units with consecutive index numbers $\quad$ S25

FIG.4

Pool                                      16bit

| | | |
|---|---|---|
| 0 | wLogicSFrmNum<br>wPhySFrmBitmap | 0<br>0000 1000 1010 1100 |
| 1 | wLogicSFrmNum<br>wPhySFrmBitmap | 5<br>0000 1000 1111 1100 |
| 2 | wLogicSFrmNum<br>wPhySFrmBitmap | 12<br>0000 0000 0000 1111 |
| 3 | wLogicSFrmNum<br>wPhySFrmBitmap | 16<br>0000 0000 1111 0000 |

......

| | | |
|---|---|---|
| 10240/16 - 1 | wLogicSFrmNum<br>wPhySFrmBitmap | 1000<br>0000 1000 1010 1100 |

FIG. 5

FIG. 6

Logical subframe    Reserved subframe   TDD downlink subframe

FIG. 7

Available subframe    Reserved subframe   TDD downlink subframe

FIG. 8

S=P*2uref time slots

d$_{slots}$ full DL time slots

µ$_{slots}$ full UL time slots

d$_{sym}$ DL symbols

remaining flexible symbols

µ$_{sym}$ UL symbols

FIG. 9

Determining, according to the logical TTI number, a third storage space the logical TTI corresponding to the logical TTI number is located — S31

Performing a modulus operation on the logical TTI number and the bit length, and acquiring a first modulus result — S32

Determining, according to the first modulus result, an offset of the logical TTI number within a third storage space where the logical TTI is located — S33

Locating a bit corresponding to the logical TTI according to the offset — S34

Detecting whether the second bit identifier of the bit corresponding to the logical TTI is the third identifier or the fourth identifier — S35

In response to the second bit identifier being the third identifier, determining that the logical TTI corresponding to the logical TTI number is an available TTI; and in response to the second bit identifier being the fourth identifier, determining that the logical TTI corresponding to the logical TTI number is an unavailable TTI — S36

FIG. 10

Comparing the logical TTI number of the arbitrary logical TTI with the total number of logical TTIs stored in each of the storage units, and acquiring total numbers of logical TTIs greater than the logical TTI number

/ S41

Acquiring a total number of a logical TTI having a minimum value from the total numbers of logical TTIs greater than the logical TTI number

/ S42

Taking a storage unit corresponding to the total number of the logical TTI having the minimum value as a storage unit where a logical TTI corresponding to the logical TTI number is located, and acquiring an index number corresponding to the storage unit where the logical TTI is located

/ S43

Calculating a difference between the logical TTI number and the total number of logical TTIs stored in the storage unit where the logical TTI is located, and acquiring a position rank of the logical TTI in the logical TTIs stored in the storage unit where the logical TTI is located

/ S44

Acquiring, according to the position rank, a bit of the logical TTI within a first storage space of the storage unit where the logical TTI is located

/ S45

Counting, according to an arrangement sequence of the absolute TTI of the resource pool when stored into the first storage space, an order number of the bit within the first storage space

/ S46

Multiplying the index number corresponding to the storage unit where the logical TTI is located by the bit capacity set for the first storage space to acquire a product value, and adding the product value and the order number to acquire an absolute subframe number corresponding to the arbitrary logical subframe

/ S47

FIG. 11

Dividing the absolute TTI number by the bit capacity and rounding down the quotient, and acquiring an index number of a storage unit where a logical TTI corresponding to the absolute TTI number is located /⟋ S51

Performing a modulus operation on the absolute TTI number and the bit capacity, and acquiring a second modulus result /⟋ S52

Detecting whether an absolute TTI corresponding to the absolute TTI number is the logical TTI according to the absolute TTI number, the index number and the second modulo result /⟋ S53

In response to the absolute TTI corresponding to the absolute TTI number being the logical TTI, taking the second modulus result as an order number of the logical TTI corresponding to the absolute TTI number within the first storage space when the absolute TTI is stored in the first storage space /⟋ S54

Determining, from the first storage space, a quantity of the logical TTIs contained in absolute TTIs of whose order numbers are less than or equal to the order number of the logical TTI /⟋ S55

Acquiring, according to the index number, a total number of logical TTIs stored in a corresponding storage unit /⟋ S56

Adding the determined quantity of logical TTIs to the total number of logical TTIs acquired according to the index number, and acquiring a logical TTI number of a logical TTI corresponding to the absolute TTI number /⟋ S57

FIG. 12

Determining, according to the index number, a storage unit where the absolute TTI corresponding to the absolute TTI number is located — S61

Offsetting, the second modulo result in a direction of increasing the absolute subframe number from a bit with a smallest absolute TTI number among the absolute TTI bits stored in the storage unit where the absolute TTI is located, and acquiring corresponding bits — S62

Acquiring a first bit identifier of the corresponding bits — S63

Performing an AND operation on the acquired first bit identifier and a first bit identifier of each bit in a first bit code stream corresponding to all bits stored in a first storage space of a storage unit where the absolute TTI is located, and acquiring a second bit code stream — S64

In response to a value corresponding to the second bit code stream being 0, determining that the absolute TTI corresponding to the absolute TTI number is not the logical TTI — S65

In response to the value corresponding to the second bit stream being not 0, determining that the absolute TTI corresponding to the absolute TTI number is the logical TTI — S66

FIG. 13

FIG. 14

FIG. 15

Computer readable storage
medium $300$

FIG. 16

# EP 4 761 403 A1

## INTERNATIONAL SEARCH REPORT

International application No.

**PCT/CN2024/105770**

### A. CLASSIFICATION OF SUBJECT MATTER

H04W72/04(2023.01)i

According to International Patent Classification (IPC) or to both national classification and IPC

### B. FIELDS SEARCHED

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNTXT, ENTXT, DWPI, CNKI: 系统帧号, 传输时间间隙, 资源池, 总数, 比特, 子帧, 时隙, SFN, System Frame Number , TTI, Transmission Time Interval, resource pool, bit, sub frame, slot

### C. DOCUMENTS CONSIDERED TO BE RELEVANT

| Category* | Citation of document, with indication, where appropriate, of the relevant passages | Relevant to claim No. |
|---|---|---|
| A | EP 4203592 A1 (LG ELECTRONICS INC.) 28 June 2023 (2023-06-28) description, paragraphs [0118]-[0145] | 1-17 |
| A | WO 2022169244 A1 (LG ELECTRONICS INC.) 11 August 2022 (2022-08-11) entire document | 1-17 |
| A | CN 109392149 A (ZTE CORP.) 26 February 2019 (2019-02-26) entire document | 1-17 |
| A | CN 111294944 A (BEIJING SPREADTRUM HIGH-TECH COMMUNICATIONS TECHNOLOGY CO., LTD.) 16 June 2020 (2020-06-16) entire document | 1-17 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 October 2024** | **16 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 761 403 A1

**INTERNATIONAL SEARCH REPORT**
**Information on patent family members**

International application No.

**PCT/CN2024/105770**

| Patent document cited in search report | | | Publication date (day/month/year) | Patent family member(s) | | | Publication date (day/month/year) |
|---|---|---|---|---|---|---|---|
| EP | 4203592 | A1 | 28 June 2023 | JP | 2023546846 | A | 08 November 2023 |
| | | | | WO | 2022080843 | A1 | 21 April 2022 |
| | | | | KR | 20230042382 | A | 28 March 2023 |
| | | | | US | 2022124682 | A1 | 21 April 2022 |
| WO | 2022169244 | A1 | 11 August 2022 | EP | 4290968 | A1 | 13 December 2023 |
| | | | | KR | 20230135605 | A | 25 September 2023 |
| | | | | US | 2024314748 | A1 | 19 September 2024 |
| CN | 109392149 | A | 26 February 2019 | None | | | |
| CN | 111294944 | A | 16 June 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311031176